# EUROPÄISCHE PATENTANMELDUNG

(11) **EP 1 418 414 A2**
(43) Veröffentlichungstag der Anmeldung: **12.05.2004**
(21) Anmeldenummer: 03025142.5
(22) Anmeldetag: 03.11.2003
(51) Int. Cl.: G01M 1/32

(54) **Verfahren zum Auswuchten einer Druckplattenbaugruppe einer Reibungskupplung**

(30) Priorität: 06.11.2002 DE 10251594
(71) Anmelder: ZF Sachs AG, 97424 Schweinfurt (DE)
(72) Erfinder: Vogt, Sebastian, Dipl.-Ing., 97616 Bad Neustadt (DE)

(57) **Zusammenfassung**

Ein Verfahren zum Auswuchten einer Druckplattenbaugruppe einer Reibungskupplung, welche Druckplattenbaugruppe (10) eine Gehäuseanordnung (12) und eine mit der Gehäuseanordnung (12) zur gemeinsamen Drehung gekoppelte Anpressplatte aufweist, wobei die Gehäuseanordnung (12) einen Verbindungsbereich (18) zur festen Verbindung derselben mit einer Widerlageranordnung umfasst, umfasst die Schritte:
a) Ermitteln wenigstens eines Bereichs, in welchem an der Gehäuseanordnung (12) eine Auswuchtmasse (30) anzubringen ist,
b) Anbringen einer plattenartigen Auswuchtmasse (30) an wenigstens einem im Schritt a) ermittelten Bereich der Gehäuseanordnung (12).

## Beschreibung

Die vorliegende Erfindung betrifft ein Verfahren zum Auswuchten einer Druckplattenbaugruppe einer Reibungskupplung, welche Druckplattenbaugruppe eine Gehäuseanordnung und eine mit der Gehäuseanordnung zur gemeinsamen Drehung gekoppelte Anpressplatte aufweist, wobei die Gehäuseanordnung einen Verbindungsbereich zur festen Verbindung derselben mit einer Widerlageranordnung umfasst.

Beim Herstellungsvorgang von Druckplattenbaugruppen ist es erforderlich, nach dem Zusammenfügen der verschiedenen Druckplattenbaugruppenkomponenten, also im Wesentlichen der Gehäuseanordnung, der Anpressplatte und einer Kraftbeaufschlagungsanordnung, im Allgemeinen Membranfeder oder Kraftübertragungshebelanordnung, zu ermitteln, ob bzw. in welchem Ausmaß in der so zusammengebauten Baugruppe Unwuchten vorhanden sind. Um im Drehbetrieb das Auftreten von Drehungleichförmigkeiten zu vermeiden, müssen dann zum Kompensieren von ermittelten Unwuchten Maßnahmen ergriffen werden, die im Allgemeinen das Anbringen zusätzlicher Masseteile umfassen.

Es ist die Aufgabe der vorliegenden Erfindung, ein Verfahren zum Auswuchten einer Druckplattenbaugruppe einer Reibungskupplung vorzusehen, mit welchem in einfacher Art und Weise die in einer Druckplattenbaugruppe vorhandenen Unwuchten kompensiert werden können.

Gemäß der vorliegenden Erfindung wird diese Aufgabe gelöst durch ein Verfahren zum Auswuchten einer Druckplattenbaugruppe einer Reibungskupplung, welche Druckplattenbaugruppe eine Gehäuseanordnung und eine mit der Gehäuseanordnung zur gemeinsamen Drehung gekoppelte Anpressplatte aufweist, wobei die Gehäuseanordnung einen Verbindungsbereich zur festen Verbindung derselben mit einer Widerlageranordnung umfasst, umfassend die Schritte:
a) Ermitteln wenigstens eines Bereichs, in welchem an der Gehäuseanordnung eine Auswuchtmasse anzubringen ist,
b) Anbringen einer plattenartigen Auswuchtmasse an wenigstens einem im Schritt a) ermittelten Bereich der Gehäuseanordnung.

Durch den Einsatz plattenartiger Auswuchtmassen bei dem erfindungsgemäßen Verfahren besteht nicht die Gefahr, dass durch irgendwelche von der Druckplattenbaugruppe dann vorspringende Bauteile eine Störung mit anderen Komponenten in einem Antriebssystem erzeugt wird.

Beispielsweise kann aus Stabilitätsgründen vorgesehen sein, dass im Schritt a) wenigstens ein Bereich zum Anbringen einer Auswuchtmasse ermittelt wird, der in dem Verbindungsbereich der Gehäuseanordnung liegt. Dies ist besonders dann vorteilhaft, wenn der Verbindungsbereich der Gehäuseanordnung eine Mehrzahl von Verbindungsstegen umfasst, in deren Bereich Befestigungsbolzen zur Festlegung der Gehäuseanordnung an der Widerlageranordnung durch die Gehäuseanordnung hindurchführbar sind.

Um bei einer derartigen Anordnung für einen sehr stabilen Halt einer Auswuchtmasse an der Druckplattenbaugruppe sorgen zu können, wird vorgeschlagen, dass eine im Schritt b) an dem Verbindungsbereich der Gehäuseanordnung anzubringende Auswuchtmasse eine Durchgriffsaussparung für einen Befestigungsbolzen aufweist.

Weiter ist es besonders vorteilhaft, wenn die Auswuchtmasse wenigstens einen Haltevorsprung aufweist, der zur wenigstens provisorischen Festlegung der Auswuchtmasse an der Gehäuseanordnung mit dieser in Eingriff gebracht wird. Der Ausdruck "provisorische Festlegung" bedeutet hier, dass nachfolgend, beispielsweise durch das Festlegen der Druckplattenbaugruppe an der Widerlageranordnung, eine zusätzliche und dann endgültig wirksame Fixierung einer Auswuchtmasse vorgesehen ist. Gleichwohl kann eine derartige der "provisorischen Festlegung" dienende Maßnahme ebenso eine sehr stabile und keine zusätzlichen Maßnahmen erfordernde Halterung der Auswuchtmasse an der Gehäuseanordnung darstellen.

Gemäß einem weiteren Aspekt kann vorgesehen sein, dass die Auswuchtmasse mit der Gehäuseanordnung wenigstens provisorisch durch Verklebung, Vernietung oder Verschweißung verbunden wird. Eine sehr stabile Halterung einer Auswuchtmasse an der Gehäuseanordnung kann auch dadurch erlangt werden, dass die Auswuchtmasse mit der Gehäuseanordnung durch Vernietung verbunden wird.

Um sehr präzise eine im Schritt a) ermittelte Unwucht kompensieren zu können, wird vorgeschlagen, dass zur Durchführung des Schrittes b) eine Auswuchtmasse mit an die ermittelte Unwucht angepasster Länge, Dicke und Breite aus einer Vielzahl von Auswuchtmassen ausgewählt wird, die sich in ihrer Länge oder/und Dicke oder/und Breite unterscheiden.

Gemäß einem weiteren Aspekt betrifft die vorliegende Erfindung eine Auswuchtmasse für eine Druckplattenbaugruppe, umfassend wenigstens eine Aussparung zur Hindurchführung eines die Druckplattenbaugruppe an einer Widerlageranordnung festlegenden Befestigungsbolzens oder/und wenigstens einen Haltevorsprung, welcher mit einer Gehäuseanordnung der Druckplattenbaugruppe in Eingriff bringbar ist.

Mit einer derartigen Auswuchtmasse kann in einfacher und zuverlässig wirkender Art und Weise eine Halterung derselben an einer Druckplattenbaugruppe, beispielsweise einer Gehäuseanordnung derselben, erlangt werden.

Die vorliegende Erfindung wird nachfolgend mit Bezug auf die beiliegenden Figuren detailliert beschrieben. Es zeigt:
- Fig. 1: eine perspektivische Ansicht einer Druckplattenbaugruppe;
- Fig. 2: eine Detailansicht der in Fig. 1 gezeigten Druckplattenbaugruppe mit einer Auswuchtmasse;
- Fig. 3: eine der Fig. 2 entsprechende Ansicht mit einer anderen Auswuchtmasse;
- Fig. 4: eine weitere der Fig. 2 entsprechende Ansicht mit einer anderen Auswuchtmasse;
- Fig. 5: eine der Fig. 2 entsprechende Ansicht, bei welcher die Auswuchtmasse zusätzlich durch einen Befestigungsbolzen gehaltert ist;
- Fig. 6: eineperspektivischeAnsichtverschiedenerAuswuchtmassen;
- Fig. 7: eine Detailansicht der in Fig. 1 gezeigten Druckplattenbaugruppe mit einer weiteren alternativen Auswuchtmasse;
- Fig. 8: die in Fig. 7 gezeigte Anordnung, bei welcher die Auswuchtmasse durch einen Befestigungsbolzen gehaltert ist;
- Fig. 9: die bei den Anordnungen, der Fig. 7 und 8 eingesetzte Auswuchtmasse;
- Fig. 10: eine Detailansicht der in Fig. 1 gezeigten Druckplattenbaugruppe mit einer weiteren alternativen Auswuchtmasse;
- Fig. 11: die Anordnung der Fig. 10 in Verbindung mit einem Befestigungsbolzen;
- Fig. 12: die in der Anordnung der Fig. 10 und 11 eingesetzte Auswuchtmasse;
- Fig. 13: eine weitere Detailansicht der in Fig. 1 gezeigten Druckplattenbaugruppe mit einer weiteren alternativen Auswuchtmasse;
- Fig. 14: die bei der Anordnung der Fig. 13 eingesetzte Auswuchtmasse;
- Fig. 15: eine weitere Detailansicht der in Fig. 1 gezeigten Druckplattenbaugruppe mit einer weiteren alternativen Auswuchtmasse;
- Fig. 16: die bei der Anordnung der Fig. 15 eingesetzte Auswuchtmasse;
- Fig. 17: eine weitere Detailansicht der in Fig. 1 gezeigten Druckplattenbaugruppe mit einer weiteren alternativen Auswuchtmasse;
- Fig. 18: die bei der Anordnung der Fig. 17 eingesetzte Auswuchtmasse;
- Fig. 19: eine weitere Detailansicht der in Fig. 1 gezeigten Druckplattenbaugruppe mit einer alternativen Auswuchtmasse;
- Fig. 20: eine weitere Detailansicht der in Fig. 1 gezeigten Druckplattenbaugruppe mit einer alternativen Auswuchtmasse;
- Fig. 21: eine perspektivische Ansicht einer alternativ ausgestalteten Druckplattenbaugruppe.

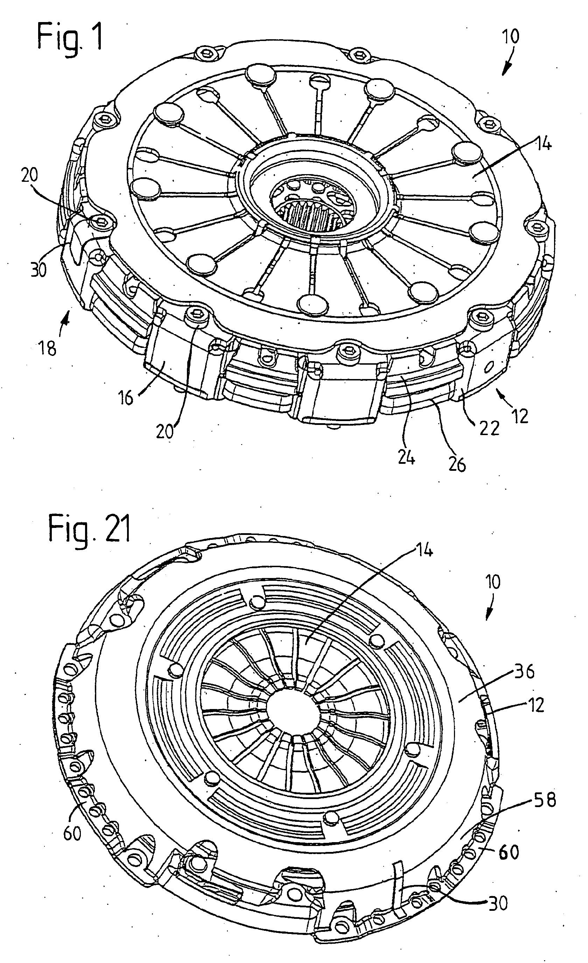

In Fig. 1 ist eine erste Ausgestaltungsform einer Druckplattenbaugruppe 10 für eine Kraftfahrzeugreibungskupplung gezeigt.

Die Druckplattenbaugruppe 10 umfasst eine Gehäuseanordnung 12, die einen hier an ihrer Außenseite durch einen Kraftspeicher 14 überdeckten Bodenbereich aufweist, von dem mehrere in Umfangsrichtung aufeinander folgende und sich in Richtung einer Drehachse des Gesamtsystems erstreckende Verbindungsstege 16 ausgehen. Diese Verbindungsstege 16 bilden in ihrer Gesamtheit einen Verbindungsbereich 18, und es ist in Umfangsrichtung verteilt bei jedem derartigen Verbindungssteg 16 ein Befestigungsbolzen 20 vorgesehen, der das Gehäuse 12 axial durchsetzt und mit einem freien Ende in eine Widerlageranordnung, beispielsweise ein Schwungrad o. dgl., eingeschraubt werden kann. Das Gehäuse 12 ist aus Blechmaterial gebildet, und der Verbindungsbereich 18 bzw. die einzelnen Verbindungsstege 16 können durch Umformen des Blechmaterials bereitgestellt werden.

Jeweils zwischen zwei derartigen Verbindungsstegen 16 ist eine Aussparung 22 gebildet. In jede Aussparung 22 greift ein Drehkopplungsarm 24 einer mit dem Gehäuse 12 auf diese Art und Weise drehfest gekoppelten Anpressplatte sowie ein entsprechender Arm 26 einer auf diese Art und Weise ebenfalls mit der Gehäuseanordnung 12 drehfest gekoppelten Zwischenplatte ein. Zwischen der Anpressplatte und der Zwischenplatte einerseits und der Zwischenplatte und der nicht dargestellten Widerlageranordnung andererseits liegt jeweils eine Kupplungsscheibe mit ihren Reibbelägen, wenn die Druckplattenbaugruppe 10 mit der Widerlageranordnung zur Bereitstellung einer Reibungskupplung zusammengefügt ist. Der Kraftspeicher 14, welcher, wie bereits ausgeführt, an der Außenseite der Gehäuseanordnung vorgesehen ist, beaufschlagt die Anpressplatte in mehreren den Bodenbereich der Gehäuseanordnung 12 durchsetzenden Beaufschlagungsabschnitten derselben.

Vorangehend wurde der grundsätzliche Aufbau einer Druckplattenbaugruppe 10 für eine so genannte Zweischeibenkupplung beschrieben. Es ist selbstverständlich, dass eine derartige Druckplattenbaugruppe in verschiedensten Bereichen anders ausgestaltet sein kann als vorangehend beschrieben. So ist selbstverständlich eine Ausgestaltungsform realisierbar, bei welcher der Kraftspeicher 14 innerhalb des Gehäuses zwischen dem Bodenbereich und der Anpressplatte positioniert ist. Auch kann selbstverständlich eine Verschleißkompensationsanordnung vorgesehen sein.

Nach dem Zusammenfügen einer derartigen Baugruppe ist es erforderlich, in einem Auswuchtvorgang dafür zu sorgen, dass beim bzw. nach dem Eingliedern in einen Antriebsstrang keine Drehungleichförmigkeiten im Bereich der Druckplattenbaugruppe 10 bzw. der diese aufweisenden Reibungskupplung erzeugt werden. Dabei wird so vorgegangen, dass zunächst ermittelt wird, wo bzw. in welchem Ausmaß eine Unwucht vorhanden ist und wo Auswuchtmassen anzubringen sind. Da bei der vorangehend mit Bezug auf die Fig. 1 beschriebenen Druckplattenbaugruppe 10 die Gehäuseanordnung 12 von außen im Wesentlichen nur im Bereich des Verbindungsbereichs 18 bzw. der einzelnen Stege 16 zugänglich ist, wird die durchzuführende Kompensationsmaßnahme so bestimmt, dass die anzubringende Auswuchtmasse bzw. ggf. mehrere derartige Auswuchtmassen in dem Bereich eines derartigen Verbindungsstegs 16 bzw. des Verbindungsbereichs 18 vorgesehen werden können. Würde beispielsweise beim Ermitteln der vorhandenen Unwucht festgestellt werden, dass eine Auswuchtmasse in einem Umfangsbereich zwischen zwei aufeinander folgenden Stegen 16 anzubringen wäre, so kann beispielsweise derart vorgegangen werden, dass zwei Auswuchtmassen mit entsprechend reduziertem Gewicht an diesen beiden den ermittelten Bereich begrenzenden Verbindungsstegen 16 angebracht werden.

Nachfolgend werden verschiedene Möglichkeiten beschrieben, wie derartige Auswuchtmassen ausgebildet sein können bzw. an der Druckplattenbaugruppe 10 angebracht werden können.

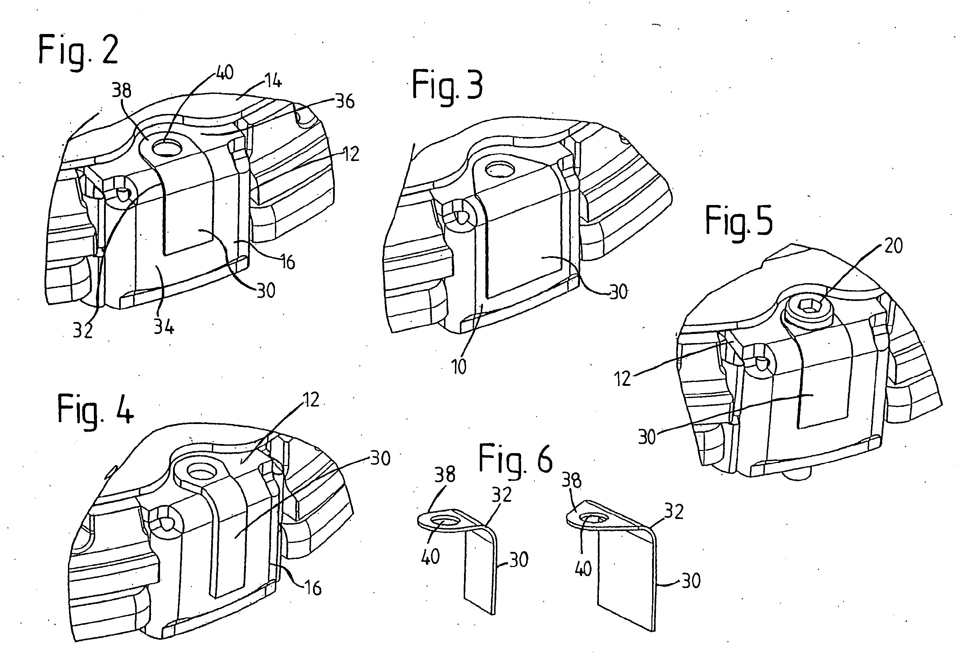

So erkennt man zunächst in den Fig. 1 und 2, dass eine anzubringende Auswuchtmasse 30 plattenartig ausgebildet sein kann und ggf. ebenfalls aus Blechmaterial gefertigt sein kann. Die Auswuchtmasse 30 ist an die Formgebung des Verbindungsbereichs 18 bzw. der Verbindungsstege 16 angepasst und weist einen Krümmungsabschnitt 32 auf, um sowohl an der Außenumfangsfläche 34 des Verbindungsstegs 16 anliegen zu können, als auch an dem Bodenbereich 36 der Gehäuseanordnung 12 anliegen zu können. In demjenigen Abschnitt 38, in welchem die Auswuchtmasse 30 am Bodenbereich 36 anliegt, ist eine Durchgriffsöffnung 40 vorgesehen, durch welche beim Festlegen der Druckplattenbaugruppe 10 an der Widerlageranordnung dann ein Befestigungsbolzen 20 hindurchgeführt werden kann. Auf diese Art und Weise ist die Auswuchtmasse 30 dann fest und unverlierbar an der Druckplattenbaugruppe 10 gesichert. Bei Durchführung des Auswuchtvorgangs kann es jedoch vorteilhaft sein, die Auswuchtmasse 30 zunächst vorübergehend durch eine Schweißverbindung, Lötverbindung oder eine Klebeverbindung an der Gehäuseanordnung 12 vorzufixieren, so dass die Druckplattenbaugruppe 10 als selbständige und bereits ausgewuchtete Baugruppe zu einem Fahrzeughersteller geliefert werden kann, wo sie dann mit der Widerlageranordnung zusammengesetzt wird.

Um eine ermittelte Unwucht in geeignetem Ausmaß kompensieren zu können, ist es möglich, wie in den Fig. 3-6 gezeigt, in Anpassung an die ermittelte Unwucht verschiedene Auswuchtmassen 30 aus einem Reservoir von Auswuchtmassen 30 auszuwählen, wobei diese verschiedenen Auswuchtmassen, wie in den Fig. 3 - 6 erkennbar, sich in ihrer Breite - hier betrachtet in Umfangsrichtung -, in ihrer Länge - hier betrachtet in Richtung der Drehachse bzw. auch den abgeknickten Bereich berücksichtigend - und ihrer Dicke unterscheiden können. Auch ist es grundsätzlich möglich, Auswuchtmassen 30 aus unterschiedlichen Materialien, d.h. Materialien mit unterschiedlicher Dichte, bereitzuhalten, um eine sehr feine Anpassung an die ermittelte und zu kompensierende Unwucht zu erhalten.

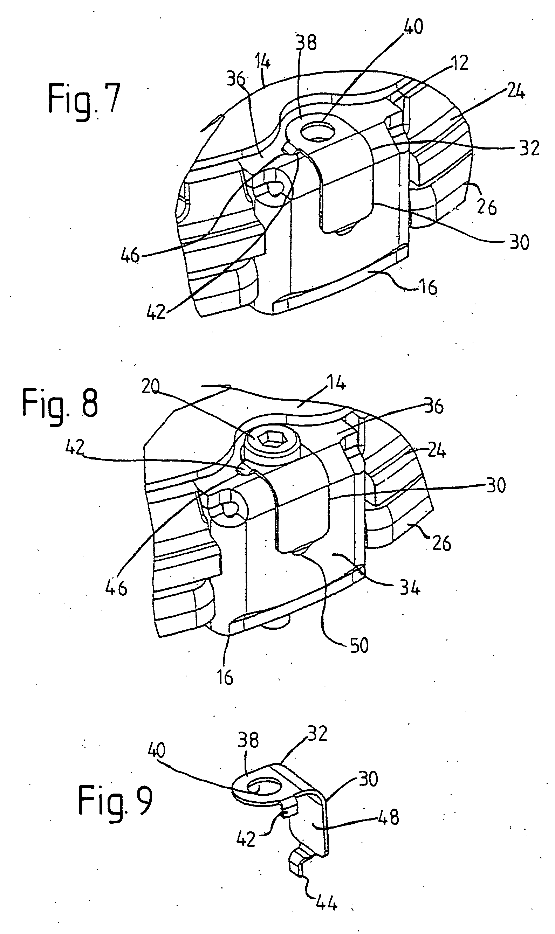

Die vorübergehende Festlegung einer Auswuchtmasse 30 an der Gehäuseanordnung 12 bis zur Befestigung dieser Gehäuseanordnung bzw. gesamten Druckplattenbaugruppe an einer Widerlageranordnung kann alternativ oder zusätzlich zu den vorangehend beschriebenen Maßnahmen auch dadurch erfolgen, dass an einer derartigen Auswuchtmasse zumindest ein Haltevorsprung vorgesehen ist, der in Eingriff mit der Gehäuseanordnung steht oder gebracht wird und auf diese Art und Weise eine zumindest vorübergehende oder provisorische Fixierung ermöglicht. So ist in den Fig. 7-9 eine Ausgestaltungsform gezeigt, bei welcher an einer plattenartigen Auswuchtmasse 30, die grundsätzlich die vorangehend bereits beschriebene und an die Formgebung der Gehäuseanordnung 12 angepasste gekrümmte Kontur aufweist, zwei derartige Haltevorsprünge 42, 44 vorhanden sind. Der Haltevorsprung 42 steht seitlich von dem am Bodenbereich 36 der Gehäuseanordnung 12 anliegend zu positionierenden Abschnitt 38 ab und greift bei Anbringung der Auswuchtmasse 30 an der Gehäuseanordnung 12 in eine diesem zugeordnete Öffnung 46 im Bodenbereich 36 der Gehäuseanordnung 12 ein. Der Haltevorsprung 44 ist am Ende des an der Außenumfangsseite 34 eines Verbindungsstegs 16 anliegend zu positionierenden Abschnitts 48 vorgesehen und ist derart ausgebildet, dass er durch Schwenk-Schiebe-Einführung in eine diesem zugeordnete Öffnung 50 in der Gehäuseanordnung 12 in Eingriff mit dieser gebracht werden kann. Bei dieser Schwenk-Schiebe-Einführung tritt dann auch der Haltevorsprung 42 in die diesem zugeordnete Öffnung 46 ein. Die endgültige Fixierung der Auswuchtmasse 30 erfolgt auch hier wieder durch das Hindurchführen eines Befestigungsbolzens durch die Öffnung 40. Insbesondere das Vorsehen eines derartigen am freien Ende des Abschnitts 48 positionierten Haltevorsprungs 44 dient dazu, die Auswuchtmasse 30 zusätzlich zu der ohnehin vorhandenen Befestigung vermittels eines Befestigungsbolzens 20 auch in ihrem anderen Endbereich gegen Fliehkrafteinwirkung sicher an der Gehäuseanordnung 12 zu halten.

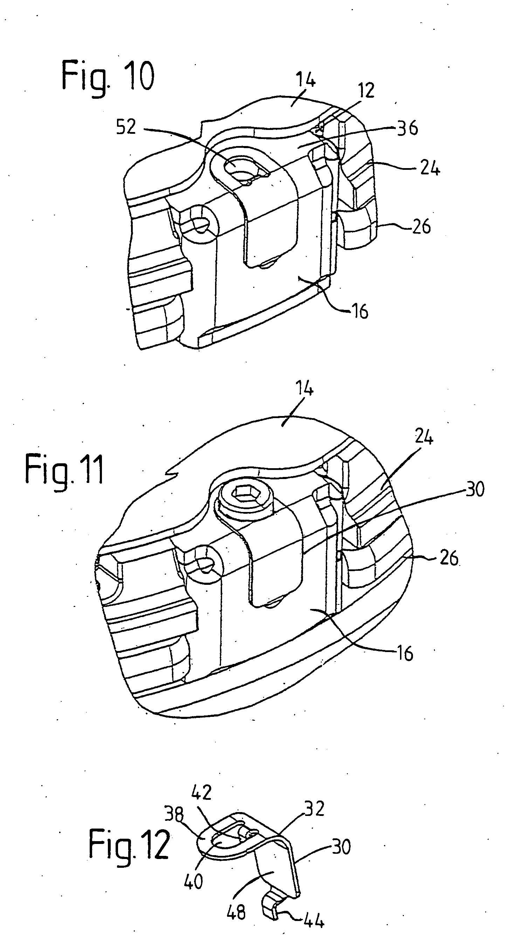

Eine alternative Ausgestaltungsform hierzu ist in den Fig. 10 - 12 gezeigt. Auch hier weist die Auswuchtmasse 30 wieder zwei Haltevorsprünge 42, 44 auf, wobei nunmehr jedoch der Haltevorsprung 42 so positioniert ist, dass er im Wesentlichen zentral - betrachtet in Umfangsrichtung - in dem Abschnitt 38 der Auswuchtmasse 30 angeordnet ist und bei Durchführung der vorangehend erläuterten Schwenk-Schiebe-Einführung in die zur Aufnahme eines Befestigungsbolzens 20 im Bodenbereich 36 der Gehäuseanordnung 12 vorgesehene Öffnung 52 eingreifend positioniert wird.

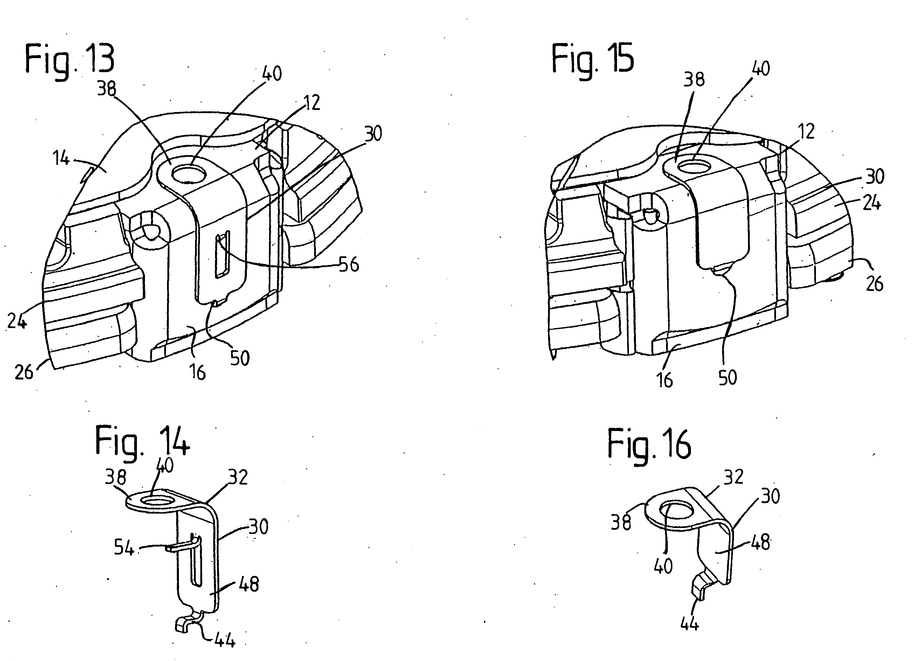

Bei der in den Fig. 13 und 14 dargestellten Ausgestaltungsform ist zusätzlich zu dem an dem Abschnitt 48 der Auswuchtmasse 30 bereits vorgesehenen Haltevorsprung 44 ein durch Einbringen einer U-förmigen Stanzung gebildeter zungenartiger Haltevorsprung 54 in diesem Abschnitt 48 gebildet. In dem Verbindungssteg 16 ist eine diesen Haltevorsprung 54 aufnehmende Öffnung 56 vorgesehen, wobei der Haltevorsprung 54 unter Berücksichtigung seiner Elastizität so geformt sein kann, dass bei Einführung des Haltevorsprungs 44 in die diesen aufnehmende Öffnung 50 und dem bei Durchführung der Schwenkbewegung auftretenden Einführen des Haltevorsprungs 54 in die Öffnung 56 die Auswuchtmasse 30 an der Gehäuseanordnung 12 fest geklammert wird. Die endgültige Festlegung kann dann wieder durch einen Befestigungsbolzen erfolgen.

Bei der in Fig. 15 gezeigten Ausgestaltungsvariante ist nur der am Ende des Abschnitts 48 der Auswuchtmasse 30 vorgesehene Haltevorsprung 44 vorhanden, welcher in die zugeordnete Öffnung 50 der Gehäuseanordnung 12 eingeführt wird. Um hier bei Durchführung der Schwenkeinführung bzw. danach für eine provisorische Halterung der Auswuchtmasse 30 zu sorgen, kann diese zusätzlich mit der Gehäuseanordnung 12 durch Verschweißung, Verlötung oder Verklebung verbunden werden. Die endgültige Fixierung kann dann wieder durch einen Befestigungsbolzen 20 erfolgen.

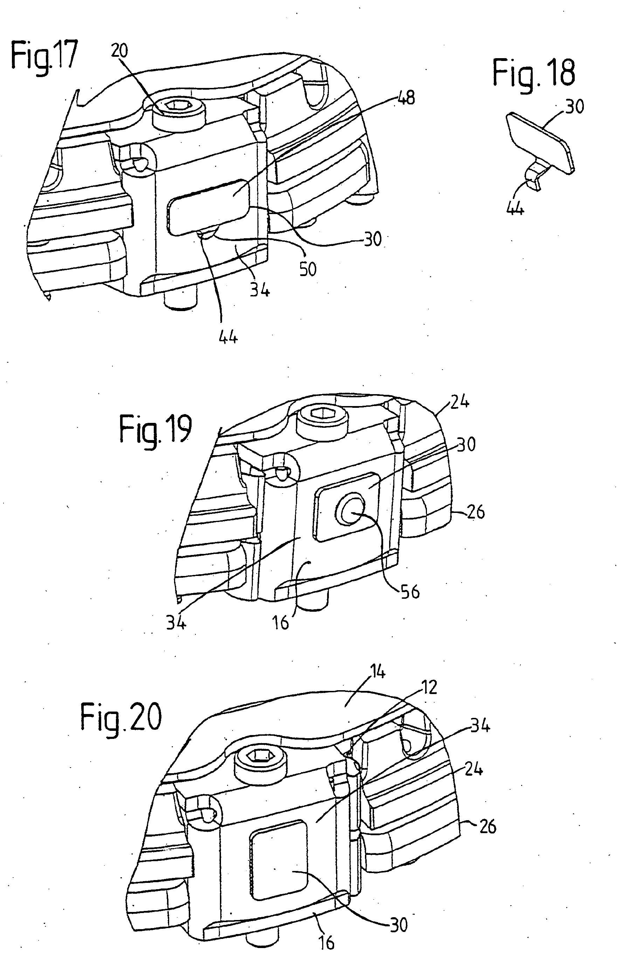

Bei der in den Fig. 17 und 18 dargestellten Ausgestaltungsform weist die Auswuchtmasse 30 im Wesentlichen nur den an der Außenumfangsfläche 34 zu positionierenden Abschnitt 48 auf, d.h. ist hier im Wesentlichen als ebene Platte ausgebildet, von welcher der Haltevorsprung 44 zum Eingreifen in die zugeordnete Öffnung 50 absteht. Die Festlegung dieser Auswuchtmasse 30 kann zusätzlich zu der Halterungsfunktion, die bereits der Haltevorsprung 44 erfüllt, wiederum durch Verlöten, Verschweißen oder Verkleben an der Außenumfangsseite 34 erfolgen. Die Befestigungsbolzen 20 haben hier dann keine Funktion zum zusätzlichen Festlegen der Auswuchtmassen 30.

Bei der in Fig. 19 gezeigten Ausgestaltungsform ist eine derartige plattenartige Auswuchtmasse 30 durch einen Nietbolzen 56, beispielsweise Blindniet, an der Außenumfangsseite 34 eines Verbindungsstegs 16 festgelegt. Bei der in Fig. 20 gezeigten Variante erfolgt diese Festlegung durch Verklebung, Verlötung oder Verschweißung.

Vorangehend sind verschiedene Ausgestaltungsformen beschrieben worden, mit welchen in einfacher und zuverlässiger Art und Weise Auswuchtmassen an einer Gehäuseanordnung angebracht werden können, die mehrere zwischen sich Drehkopplungsaussparungen definierende Verbindungsstege aufweist und die bevorzugt bei einer Zweischeibenkupplung Einsatz findet. Selbstverständlich kann eine derartige Gehäuseanordnung auch bei einer herkömmlichen Einscheibenkupplung angewandt werden.

In Fig. 21 ist eine alternativ ausgestaltete Druckplattenbaugruppe 10 gezeigt, bei welcher die Gehäuseanordnung eine im Wesentlichen topfartige Konfiguration mit einem Bodenbereich 36 und einem Außenumfangsbereich 58 aufweist. An dem Außenumfangsbereich 58 ist ein nach radial außen greifender flanschartiger Bereich 60 vorgesehen, welcher anliegend an eine Widerlageranordnung positioniert werden kann und durch welchen hindurch Befestigungsbolzen, also wiederum Schraubbolzen o. dgl., in die Widerlageranordnung eingeschraubt werden. Der Kraftspeicher 14 liegt nunmehr innerhalb der Gehäuseanordnung 12, und die Anpressplatte kann durch Tangentialblattfedern o. dgl. in herkömmlicher Art und Weise mit der Gehäuseanordnung 12 zur gemeinsamen Drehung gekoppelt sein. Um bei einer derartigen Druckplattenbaugruppe 10 Unwuchten zu kompensieren, wird vorgeschlagen, an der Außenoberfläche der Gehäuseanordnung 12 wiederum plattenartige Auswuchtmassen 30 bzw. zumindest eine derartige Auswuchtmasse 30 vorzusehen, wobei die Festlegung vorzugsweise durch Verklebung, Verlötung oder Verschweißung erfolgt. Je nach erforderlichem Gewicht kann auch hier die Abmessung der auszuwählenden Auswuchtmasse 30 variiert werden, so dass diese sich, wie in Fig. 21 gezeigt, vom Bodenbereich 36 über den Umfangsbereich 58 bis in den flanschartigen Bereich 60 erstrecken kann. Selbstverständlich ist hier auch eine Umfangsorientierung möglich.

## Patentansprüche

1. Verfahren zum Auswuchten einer Druckplattenbaugruppe einer Reibungskupplung, welche Druckplattenbaugruppe (10) eine Gehäuseanordnung (12) und eine mit der Gehäuseanordnung (12) zur gemeinsamen Drehung gekoppelte Anpressplatte aufweist, wobei die Gehäuseanordnung (12) einen Verbindungsbereich (18) zur festen Verbindung derselben mit einer Widerlageranordnung umfasst, umfassend die Schritte:
a) Ermitteln wenigstens eines Bereichs, in welchem an der Gehäuseanordnung (12) eine Auswuchtmasse (30) anzubringen ist,
b) Anbringen einer plattenartigen Auswuchtmasse (30) an wenigstens einem im Schritt a) ermittelten Bereich der Gehäuseanordnung (1 2).

2. Verfahren nach Anspruch 1,
**dadurch gekennzeichnet, dass** im Schritt a) wenigstens ein Bereich zum Anbringen einer Auswuchtmasse (30) ermittelt wird, der in dem Verbindungsbereich (18) der Gehäuseanordnung (12) liegt.

3. Verfahren nach Anspruch 1 oder 2,
**dadurch gekennzeichnet, dass** der Verbindungsbereich (18) der Gehäuseanordnung (12) eine Mehrzahl von Verbindungsstegen (16) umfasst, in deren Bereich Befestigungsbolzen (20) zur Festlegung der Gehäuseanordnung (12) an der Widerlageranordnung durch die Gehäuseanordnung (12) hindurchführbar sind.

4. Verfahren nach Anspruch 2 und Anspruch 3,
**dadurch gekennzeichnet, dass** eine im Schritt b) an dem Verbindungsbereich (18) der Gehäuseanordnung (12) anzubringende Auswuchtmasse eine Durchgriffsaussparung (40) für einen Befestigungsbolzen (20) aufweist.

5. Verfahren nach einem der Ansprüche 1 bis 4,
**dadurch gekennzeichnet, dass** die Auswuchtmasse (30) wenigstens einen Haltevorsprung (42, 44, 54) aufweist, der zur wenigstens provisorischen Festlegung der Auswuchtmasse (30) an der Gehäuseanordnung (12) mit dieser in Eingriff gebracht wird.

6. Verfahren-nach einem der Ansprüche 1 bis 5,
**dadurch gekennzeichnet, dass** die Auswuchtmasse (30) mit der Gehäuseanordnung (12) wenigstens provisorisch durch Verklebung, Vernietung oder Verschweißung verbunden wird.

7. Verfahren nach einem der Ansprüche 1 bis 6,
**dadurch gekennzeichnet, dass** die Auswuchtmasse (30) mit der Gehäuseanordnung durch Vernietung verbunden wird.

8. Verfahren nach einem der Ansprüche 1 bis 7,
**dadurch gekennzeichnet, dass** zur Durchführung des Schrittes b) eine Auswuchtmasse (30) mit an die ermittelte Unwucht angepasster Länge, Dicke und Breite aus einer Vielzahl von Auswuchtmassen (30) ausgewählt wird, die sich in ihrer Länge oder/und Dicke oder/und Breite unterscheiden.

9. Auswuchtmasse für eine Druckplattenbaugruppe, umfassend wenigstens eine Aussparung (40) zur Hindurchführung eines die Druckplattenbaugruppe (10) an einer Widerlageranordnung festlegenden Befestigungsbolzens (20) oder/und wenigstens einen Haltevorsprung (42, 44, 54), welcher mit einer Gehäuseanordnung (12) der Druckplattenbaugruppe (10) in Eingriff bringbar ist.
